(19) **Europäisches Patentamt / European Patent Office / Office européen des brevets**

(11) **EP 4 773 308 A1**

(12) **EUROPEAN PATENT APPLICATION**
published in accordance with Art. 153(4) EPC

(43) Date of publication:
08.07.2026 Bulletin 2026/28

(21) Application number: 25845326.5

(22) Date of filing: 25.07.2025

(51) International Patent Classification (IPC):
H01M 10/0568 (2010.01)    H01M 10/058 (2010.01)
H01M 10/052 (2010.01)     H01M 10/44 (2006.01)
H01M 50/609 (2021.01)     H01M 10/0567 (2010.01)
H01M 10/42 (2006.01)

(52) Cooperative Patent Classification (CPC):
H01M 10/052; H01M 10/0567; H01M 10/0568;
H01M 10/058; H01M 10/42; H01M 10/44;
H01M 50/609; Y02E 60/10; Y02P 70/50

(86) International application number:
PCT/KR2025/011088

(87) International publication number:
WO 2026/024141 (29.01.2026 Gazette 2026/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.07.2024  KR 20240098612

(71) Applicant: LG Energy Solution, Ltd.
Seoul 07335 (KR)

(72) Inventor: KIM, Byungju
Daejeon 34122 (KR)

(74) Representative: Hoffmann Eitle
Patent- und Rechtsanwälte PartmbB
Arabellastraße 30
81925 München (DE)

(54) **METHOD FOR MANUFACTURING LITHIUM SECONDARY BATTERY, AND LITHIUM SECONDARY BATTERY**

(57) The present specification relates to a method for manufacturing a lithium secondary battery and a lithium secondary battery. According to one embodiment of the present invention, provided is a method for manufacturing a lithium secondary battery, the method comprising the steps of: injecting a first electrolyte solution into a battery case in which an electrode assembly including a positive electrode and a negative electrode is accommodated; performing a first activation process after injecting the first electrolyte solution; injecting a second electrolyte solution different from the first electrolyte solution into the battery case in which the first activation process has been performed; and performing a second activation process after injecting the second electrolyte solution, wherein the lithium salt concentration of the first electrolyte solution is greater than the lithium salt concentration of the second electrolyte solution, and the difference between the lithium salt concentrations of the first electrolyte solution and the second electrolyte solution satisfies a specific range.

[FIG. 4]

EP 4 773 308 A1

**Description**

[Cross-Reference to Related Application(s)]

This application claims priority to Korean Patent Application No. 10-2024-0098612 filed on July 25, 2024, the entire contents of which are incorporated herein by reference.

[Technical Field]

The present disclosure relates to a method for manufacturing a lithium secondary battery, and a lithium secondary battery.

[Background]

Recently, with the rapid spread of electronic devices using batteries, such as mobile phones, laptop computers, electric vehicles, electrically-powered tools, and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolyte solution or a polymer electrolyte solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

During the initial charging of a lithium secondary battery, lithium ions released from the positive electrode active material, such as lithium metal oxide, migrate to the negative electrode active material and are intercalated between layers of the negative electrode active material. In this case, due to the strong reactivity of lithium ions, an electrolyte solution-derived film, such as a cathode-electrolyte interface (CEI) film formed between the positive electrode and the electrolyte solution or a solid electrolyte interphase (SEI) film formed between the negative electrode and the electrolyte solution, is formed on the surface of the electrode active material.

The electrolyte solution-derived film acts as a tunnel for lithium ions, preventing direct contact between the electrolyte solution and the electrode active material, thereby reducing side reactions during charging and discharging. However, there is a problem in that the electrolyte solution-derived film is not uniformly formed on the surface of the electrode active material or the electrolyte solution-derived film is unstably formed on the electrode surface depending on the composition of the electrolyte solution, resulting in a deterioration in battery characteristics.

[Technical Problem]

The present disclosure has been made in an effort to provide a method for manufacturing a lithium secondary battery, which enables improvements in the initial efficiency, fast charging performance, and life characteristics of a lithium secondary battery by forming a uniform electrolyte solution-derived film on a surface of a positive electrode or negative electrode active material, and a lithium secondary battery.

The technical problems to be solved by the present disclosure are not limited to those described above, and other problems not explicitly mentioned are apparent to those skilled in the art from the following description.

[Technical Solution]

An exemplary embodiment of the present invention provides a method for manufacturing a lithium secondary battery, including: injecting a first electrolyte solution into a battery case in which an electrode assembly including a positive electrode and a negative electrode is housed; performing a first activation process after injecting the first electrolyte solution; injecting a second electrolyte solution different from the first electrolyte solution into the battery case subjected to the first activation process; and performing a second activation process after injecting the second electrolyte solution, wherein the first electrolyte solution and the second electrolyte solution each independently contain a lithium salt, a lithium salt concentration of the first electrolyte solution is greater than that of the second electrolyte solution, and a difference in the lithium salt concentrations of the first electrolyte solution and the second electrolyte solution is from 0.5 M to 2 M.

An exemplary embodiment of the present invention provides a lithium secondary battery manufactured by the above manufacturing method.

[Advantageous Effects]

According to the method for manufacturing a lithium secondary battery and the lithium secondary battery according to an exemplary embodiment of the present invention, a CEI film or an SEI film derived from the first and second electrolyte solutions and having high density, small thickness, and high strength can be stably formed on a surface of an electrode active material.

The method for manufacturing a lithium secondary battery and the lithium secondary battery according to an exemplary embodiment of the present invention can improve the initial efficiency, fast charging characteristics, and life characteristics.

[Brief Description of Drawings]

FIG. 1 is a schematic view illustrating a simplified representation of an electrode in a secondary battery.
FIG. 2 is a process diagram illustrating a theoretical electrolyte solution-derived film formation process.
FIG. 3 is a process diagram illustrating an experimental electrolyte solution-derived film formation process.
FIG. 4 is a schematic view illustrating an electrolyte solution-derived film according to an exemplary embodiment of the present invention.

<Explanation of Reference Numerals and Symbols>

1: current collector
2: electrode active material
3: electrolyte solution-derived film
31: first electrolyte solution-derived film
32: second electrolyte solution-derived film

[Detailed Description]

Hereinafter, the present specification is described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

In the present specification, the composition of the first electrolyte solution and the second electrolyte solution being "different" may mean that the types, concentrations or weight ratios of lithium salts, solvents, and/or additives contained in the first electrolyte solution and the second electrolyte solution are different.

In the present specification, "p to q" means a range of "p or more and q or less."

In the present specification, "electrolyte solution-derived film" refers to a film (layer) derived from an electrolyte solution and formed on a surface of an electrode active material during charging/discharging of a battery. For example, the electrolyte solution-derived film may include a solid electrolyte interphase (SEI) film formed on a surface of a negative electrode active material or a cathode electrolyte interphase (CEI) film formed on a surface of a positive electrode active material.

In an exemplary embodiment of the present invention, the first electrolyte solution and the second electrolyte solution being different means that the types of lithium salts contained in the first electrolyte solution and the second electrolyte solution are different. Although not limited thereto, for example, the first electrolyte solution may contain a lithium salt A and the second electrolyte solution may include a lithium salt B, or the first electrolyte solution may contain lithium salts A and C and the second electrolyte solution may contain lithium salts B and C, or the first electrolyte solution may contain a lithium salt A and the second electrolyte solution may contain lithium salts B and C.

In an exemplary embodiment of the present invention, the first electrolyte solution and the second electrolyte solution being different means that the concentrations of lithium salts contained in the first electrolyte solution and the second electrolyte solution are different. Although not limited thereto, for example, when the first electrolyte solution and the second electrolyte solution each contain a lithium salt A and the concentration of the lithium salt in the first electrolyte solution is 'a M', the concentration of the lithium salt in the second electrolyte solution may be 'b M', or when the first electrolyte solution contains a lithium salt A and the second electrolyte solution contains a lithium salt B and the concentration of the lithium salt in the first electrolyte solution is 'a M', the concentration of the lithium salt in the second electrolyte solution may be 'b M'.

As used herein, the singular forms of terms, such as "a", "an" and "the", are intended to include the plural forms as well, unless the context clearly indicates otherwise.

Hereinafter, preferred exemplary embodiments of the present invention are described in detail. However, it should be understood that the exemplary embodiments of the present invention may be modified in various forms and the scope of the present invention is not limited to the exemplary embodiments described below.

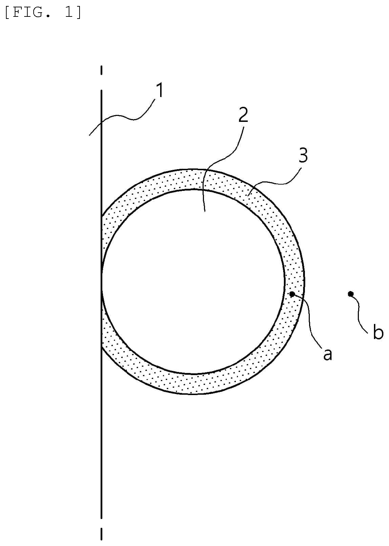

FIG. 1 is a schematic view illustrating a simplified representation of an electrode in a secondary battery.

An electrolyte solution-derived film 3, such as a solid electrolyte interphase (SEI) film or a cathode electrolyte interphase (CEI) film, formed on a surface of an electrode active material 2 during charging and discharging of a lithium secondary battery, acts as a tunnel for lithium ions, thereby preventing direct contact between an electrolyte solution and the electrode active material 2. This plays an important role in reducing side reactions that may occur during charging and discharging.

However, if the electrolyte solution-derived film 3 is formed unstably depending on the composition of the electrolyte solution, such as not being uniformly formed on the surface of the electrode active material 2, being formed with an excessive thickness, or having a low strength, a problem may arise in that required characteristics at various interfaces within a battery cannot be satisfied.

Referring to FIG. 1, at an interface (point a) close to the electrode active material 2, lithium ions should be smoothly transferred to facilitate intercalation and deintercalation of lithium ions during the charging and discharging process. Therefore, characteristics in terms of lithium-ion transfer from the electrolyte solution to the active material through the electrolyte solution-derived film 3 are required. On the other hand, at an interface (point b) relatively far from the electrode active material 2, lithium-ion transport characteristics through the electrolyte solution itself become more important. However, if the electrolyte solution-derived film 3 is non-uniformly formed, the required characteristics at each interface may not be satisfied, such as the electrolyte solution-derived film 3 not being formed normally at point a, or the electrolyte solution-derived film 3 being formed with an excessive thickness in a local region such that the electrolyte solution-derived film 3 extends up to point b. As a result, the reaction rates between respective interfaces in the battery may be delayed or the reactions may be limited, and in the worst case, the reactions may stop, resulting in a deterioration in battery performance.

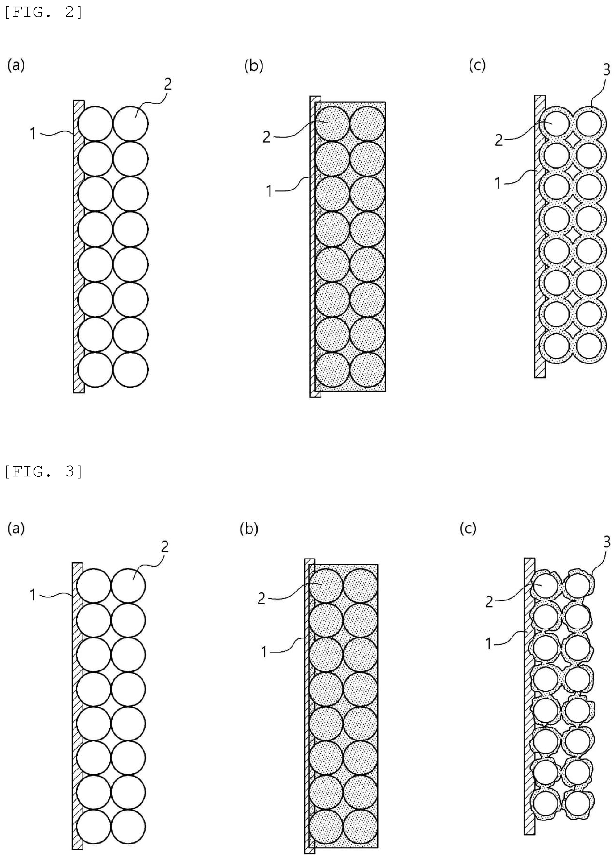

FIG. 2 is a process diagram illustrating a theoretical formation process of the electrolyte solution-derived film 3, and FIG. 3 is a process diagram illustrating an experimental formation process of the electrolyte solution-derived film 3.

FIGs. 2(a) and 3(a) illustrate an electrode in an electrode assembly before electrolyte solution injection. The electrode includes a current collector 1 and an electrode active material 2 (positive electrode active material or negative electrode active material) provided on the current collector 1. FIGs. 2(b) and 3(b) illustrate the electrode immediately after electrolyte solution injection. FIGs. 2(c) and 3(c) illustrate that an electrolyte solution-derived film 3 is formed by performing an activation process in the electrolyte solution-injected state of FIG. 2(b) or FIG. 3(b).

To solve such a problem, a method was proposed in which an electrolyte solution is injected once into a battery case including an electrode assembly and then an activation process is performed to form an electrolyte solution-derived film 3 in advance. Theoretically, the electrolyte solution-derived film 3 is expected to be uniformly and stably formed on the surface of the electrode active material 2, as shown in FIG. 2(c). However, in practice, it is confirmed that the film is non-uniformly formed as shown in FIG. 3(c), and that a uniform electrolyte solution-derived film 3 as shown in FIG. 2(c) cannot be formed.

Accordingly, the present inventors have conceived forming a solid and uniform electrolyte solution-derived film 3, which satisfies the required characteristics at each interface, on the electrode active material 2 by injecting two types of electrolyte solutions, which satisfy specific conditions, twice and performing an activation process after each injection process.

## Method for manufacturing secondary battery

A method for manufacturing a lithium secondary battery according to an exemplary embodiment of the present invention includes: injecting a first electrolyte solution into a battery case in which an electrode assembly including a positive electrode and a negative electrode is housed; performing a first activation process after injecting the first electrolyte solution; injecting a second electrolyte solution different from the first electrolyte solution into the battery case in which the first activation process has been performed; and performing a second activation process after injecting the second electrolyte solution, wherein the first electrolyte solution and the second electrolyte solution each independently contain a lithium salt, a lithium salt concentration of the first electrolyte solution is greater than that of the second electrolyte solution, and a difference in the lithium salt concentrations of the first electrolyte solution and the second electrolyte solution is from 0.5 M to 2 M.

According to an exemplary embodiment of the present invention, the lithium salt concentration of the first electrolyte solution is greater than the lithium salt concentration of the second electrolyte solution.

When an activation process is performed after injecting the electrolyte solution, an electrolyte solution-derived film 3 (SEI film or CEI film) is formed on the surface close to the electrode active material 2. In this case, since the electrolyte solution-derived film derived from the electrolyte solution having a sufficiently high lithium salt concentration has a high viscosity, there is an advantage in that many ion transport channels can be secured inside the electrode active material 2. However, in such a high-concentration electrolyte solution-derived film 3, due to the characteristics of the first electrolyte solution having a high viscosity, the impregnation rate of the electrolyte solution into the porous electrode layer is reduced, making it difficult to uniformly form the electrolyte solution-derived film 3 on the surface of the electrode active material 2. As a result, the electrolyte solution-derived film 3 may not be formed or may be formed excessively thick on certain regions of the surface of the electrode active material 2.

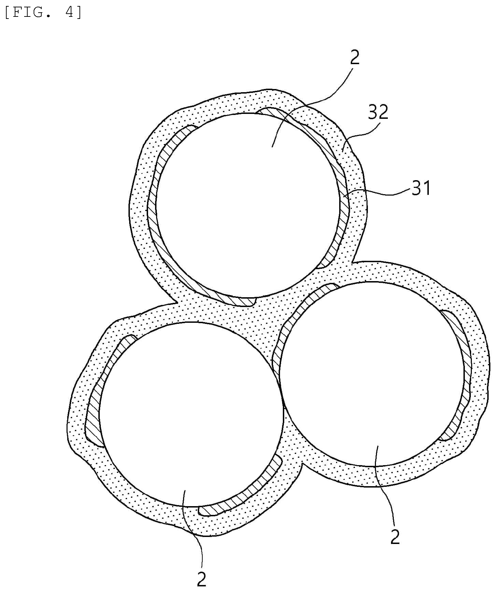

Referring to FIG. 4, the method for manufacturing a lithium secondary battery according to an exemplary embodiment of the present invention is characterized in that, after injecting a first electrolyte solution having a high lithium salt concentration and performing activating, a second electrolyte solution having a lower lithium salt concentration than that of the first electrolyte solution is injected, and a second activation process is performed, thereby forming a second electrolyte solution-derived film 32 that complements the non-uniformly formed first electrolyte solution-derived film 31, enabling an electrolyte solution-derived film 3 to be uniformly formed on the surface of an electrode active material 2. That is, since the lithium salt concentration of the second electrolyte solution is lower than the lithium salt concentration of the first electrolyte solution, the second electrolyte solution-derived film 32 can be uniformly formed on the first electrolyte solution-derived film 31 non-uniformly formed on the surface of the electrode active material 2.

In an exemplary embodiment of the present invention, a difference in the lithium salt concentrations of the first electrolyte solution and the second electrolyte solution is from 0.5 M to 2 M. For example, the difference in the lithium salt concentrations of the first electrolyte solution and the second electrolyte solution may be 0.5 M or more or 0.7 M or more, and 2 M or less, 1.5 M or less, 1.2 M or less, or 1 M or less. That is, in an exemplary embodiment of the present invention, the difference in the lithium salt concentrations of the first electrolyte solution and the second electrolyte solution may be 0.5 M to 1 M.

When the difference in the lithium salt concentrations of the first electrolyte solution and the second electrolyte solution falls within the above range, the difference in concentration between the first electrolyte solution and the second electrolyte solution is sufficient, allowing the second electrolyte solution-derived film 32, which complements the first electrolyte solution-derived film 31, to be easily formed by the low-concentration second electrolyte solution, thereby ultimately enabling the electrolyte solution-derived film 3 to be uniformly formed over the entire electrode active material 2. On the other hand, if the difference in the lithium salt concentrations of the first electrolyte solution and the second electrolyte solution exceeds the above range, the lithium salt concentration of the first electrolyte solution may become excessively high, in which case the ion conductivity of the first electrolyte solution may be decreased and the first electrolyte solution-derived film may not be formed, or the lithium salt concentration of the second electrolyte solution may become excessively low, in which case the second electrolyte solution-derived film may not be normally formed after the second activation process.

In an exemplary embodiment of the present invention, the lithium salt concentration of the first electrolyte solution may be 0.8 M to 2 M. For example, the lithium salt concentration of the first electrolyte solution may be 1 M or more, 1.1 M or more, or 1.2 M or more, and 2 M or less, 1.8 M or less, 1.6 M or less, or 1.5 M or less.

When the lithium salt concentration of the first electrolyte solution falls within the above range, a first electrolyte solution-derived film can be formed after the first activation process, which is derived from the high-viscosity first electrolyte solution and secures a sufficient number of ion channels with improved ion-transfer characteristics at positions closest to the active material in the electrode, thereby enabling lithium ions to be smoothly transferred at the interface of the electrode active material.

In an exemplary embodiment of the present invention, the lithium salt concentration of the second electrolyte solution may be 0.3 M to 1 M. For example, the lithium salt concentration of the second electrolyte solution may be 0.3 M or more, 0.4 M or more, 0.5 M or more, or 0.7 M or more, and 1 M or less, 0.8 M or less, 0.75 M or less, or 0.7 M or less.

When the second electrolyte solution contains a lithium salt within the above concentration range, a second electrolyte solution-derived film that complements the first electrolyte solution-derived film can be uniformly formed with a small thickness on the non-uniformly formed first electrolyte solution-derived film because the second electrolyte solution has a lower viscosity than that of the first electrolyte solution. On the other hand, if the lithium salt concentration of the second electrolyte solution exceeds the upper limit, the concentration difference from the first electrolyte solution is not sufficient, making it difficult for the second electrolyte solution-derived film to be formed between regions of the non-uniformly formed first electrolyte solution-derived film, which may further aggravate the non-uniformity of the electrolyte solution-derived film. If the lithium salt concentration of the second electrolyte solution is below the lower limit, the lithium salt concentration is too low, making it difficult for the second electrolyte solution-derived film to be sufficiently formed even after the activation process.

In an exemplary embodiment of the present invention, the lithium salt in the first electrolyte solution and the lithium salt in the second electrolyte solution are each independently the same or different, and each lithium salt can be used without any particular limitation as long as it is a compound capable of providing lithium ions used in a lithium secondary battery. For example, the lithium salt in the first electrolyte solution and the lithium salt in the second electrolyte solution are each independently the same or different, and $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, LiFSI, LiTFSI, $LiBF_4$, LiDFOB or a combination thereof may be used. Specifically, the lithium salt in the first electrolyte solution and the lithium salt in the second electrolyte solution are each independently the same or different, and $LiPF_6$, LiFSI or a combination thereof may be used.

In an exemplary embodiment of the present invention, types of lithium salt in the first electrolyte solution and lithium salt in the second electrolyte solution may be the same or different.

In an exemplary embodiment of the present invention, types of lithium salt in the first electrolyte solution and lithium salt in the second electrolyte solution may be the same.

In an exemplary embodiment of the present invention, types of lithium salt in the first electrolyte solution and lithium salt in the second electrolyte solution may be different.

In an exemplary embodiment of the present invention, a thermal decomposition temperature of the lithium salt in the first electrolyte solution may be lower than a thermal decomposition temperature of the lithium salt in the second electrolyte solution. That is, the thermal decomposition temperature of the lithium salt in the second electrolyte solution may be higher than the thermal decomposition temperature of the lithium salt in the first electrolyte solution. When a lithium salt having a high thermal decomposition temperature is applied as the lithium salt in the second electrolyte solution, a second electrolyte solution-derived film having high thermal stability can be formed on an outer side (a side opposite to the active material) of the electrolyte solution-derived film, thereby preventing thermal decomposition of the electrolyte solution-derived film from in a battery operating environment.

In an exemplary embodiment of the present invention, an anion of the lithium salt in the first electrolyte solution may be smaller than that of the lithium salt in the second electrolyte solution. In other words, the anion of the lithium salt in the second electrolyte solution may be larger than that of the lithium salt in the first electrolyte solution. That is, when the anion of the lithium salt in the second electrolyte solution is larger in size than that of the lithium salt in the first electrolyte solution, the ion mobility of the second electrolyte solution is further improved, thereby allowing the second electrolyte solution-derived film to be more easily formed.

Specifically, when a lithium salt having a larger anion size is used in the second electrolyte solution, compared with a case where a lithium salt having a smaller anion size is used in the second electrolyte solution, the migration characteristics of the lithium salt in the second electrolyte solution can be improved due to size-resistance effect, thereby enabling the second electrolyte solution to exhibit relatively high ion conductivity and low viscosity even at a low concentration. For example, when $LiPF_6$ is used as the lithium salt in the first electrolyte solution and LiFSI is used, instead of $LiPF_6$, as the lithium salt in the second electrolyte solution, the second electrolyte solution exhibits a relatively higher ion conductivity, resulting in improved battery characteristics.

However, in the high-concentration first electrolyte solution, as the lithium salt concentration in the electrolyte solution becomes excessively high, the Debye length between ions in the electrolyte solution becomes shortened, and the improvement in ion conductivity by the size-resistance effect due to a change in lithium salt type becomes insignificant because of the ion relaxation effect that appears accordingly and the electrophoretic effect caused by increased viscosity. Therefore, when the type of lithium salt in the second electrolyte solution having a relatively low lithium salt concentration is changed, the above-described effect can be exhibited.

In an exemplary embodiment of the present invention, the lithium salt in the first electrolyte solution may be $LiPF_6$, and the lithium salt in the second electrolyte solution may be LiFSI. When $LiPF_6$ is used as the lithium salt in the first electrolyte solution, the first electrolyte solution-derived film can be stably formed on a current collector or active material during the first electrolyte solution-derived film formation process. When the lithium salt in the second electrolyte solution is LiFSI, side reactions such as corrosion between the current collector and the lithium salt can be prevented, and even when the lithium salt concentration of the second electrolyte solution is low, the ion conductivity is high and the electrolyte solution-derived film can be uniformly formed on the surface of the active material.

In an exemplary embodiment of the present invention, a viscosity of the first electrolyte solution may be higher than a viscosity of the second electrolyte solution.

In an exemplary embodiment of the present invention, the viscosity of the first electrolyte solution may be 1 cP to 5 cP. For example, the viscosity of the first electrolyte solution may be 1 cP or more, 1.5 cP or more, 2 cP or more, 2.1 cP or more, 2.5 cP or more, 2.7 cP or more, or 2.8 cP or more, and 5 cP or less, 4 cP or less, 3 cP or less, or 2 cP or less.

In an exemplary embodiment of the present invention, the viscosity of the second electrolyte solution may be 0.5 cP to 4 cP. For example, the viscosity of the second electrolyte solution may be 0.5 cP or more, 0.7 cP or more, 1 cP or more, or 1.2 cP or more, and 4 cP or less, 3 cP or less, 2 cP or less, 1.5 cP or less, or 1.4 cP or less.

When the first electrolyte solution has a higher viscosity than that of the second electrolyte solution, a number of ion channels in the first electrolyte solution-derived film can be secured to form a robust electrolyte solution-derived film. When the second electrolyte solution has a lower viscosity than that of the first electrolyte solution, the ion mobility is improved, thereby allowing the second electrolyte solution-derived film to be formed on a surface of the active material where the first electrolyte solution-derived film has not been formed, or on the first electrolyte solution-derived film formed with a non-uniform thickness, so that a thin and uniform electrolyte solution-derived film can be formed.

In an exemplary embodiment of the present invention, the viscosity of the electrolyte solution refers to the viscosity of the electrolyte solution measured at room temperature (25°C). For example, the viscosity may be measured at 25°C using an RS150 viscometer (manufacturer: McIntosh) for an electrolyte solution containing an organic solvent obtained by mixing ethylene carbonate (EC), ethyl methyl carbonate (EMC), and dimethyl carbonate (DMC) at a volume ratio of 20:5:75.

In an exemplary embodiment of the present invention, an ion conductivity of the first electrolyte solution may be higher than an ion conductivity of the second electrolyte solution. That is, the ion conductivity of the second electrolyte solution may be lower than the ion conductivity of the first electrolyte solution.

In an exemplary embodiment of the present invention, the ion conductivity of the first electrolyte solution may be 10 mS/cm to 15 mS/cm. For example, the ion conductivity of the first electrolyte solution may be 10 mS/cm or more, 11 mS/cm or more, or 12 mS/cm or more, and 15 mS/cm or less, 14 mS/cm or less, or 13 mS/cm or less.

In an exemplary embodiment of the present invention, the ion conductivity of the second electrolyte solution may be 7 mS/cm to 13 mS/cm. For example, the ion conductivity of the second electrolyte solution may be 7 mS/cm or more, 7.5 mS/cm or more, 8 mS/cm or more, 8.5 mS/cm or more, 9 mS/cm or more, or 9.5 mS/cm or more, and 13 mS/cm or less, 12 mS/cm or less, 11 mS/cm or less, or 10 mS/cm or less. When the ion conductivity of the second electrolyte solution falls within the above range, the ion mobility in the second electrolyte solution is improved, thereby allowing the second electrolyte solution-derived film to be formed on a surface of the active material where the first electrolyte solution-derived film has not been formed, or on the first electrolyte solution-derived film formed with a non-uniform thickness, so that a thin and uniform electrolyte solution-derived film can be formed.

In an exemplary embodiment of the present invention, the ion conductivity of the electrolyte solution refers to the ion conductivity of the electrolyte solution measured at room temperature (25°C). For example, the ion conductivity may be measured using a probe-type ion conductivity measuring device (InoLab 731. Model S470, Manufacturer: Mettler Torodo) for an electrolyte solution containing an organic solvent obtained by mixing ethylene carbonate (EC), ethyl methyl carbonate (EMC), and dimethyl carbonate (DMC) in a volume ratio of 20:5:75.

In an exemplary embodiment of the present invention, the first electrolyte solution may further contain an additive.

In an exemplary embodiment of the present invention, the first electrolyte solution may contain an SEI film-forming agent as an additive. The SEI film-forming agent is a compound that facilitates the formation of an SEI film by an electrochemical oxidation or reduction decomposition reaction, and may be at least one selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the first electrolyte solution.

The SEI film-forming agent may be selected according to the type of lithium salt or solvent in the first electrolyte solution. Specifically, the SEI film-forming agent may be one or more selected from the group consisting of vinylene carbonate (VC), vinyl ethylene carbonate (VEC), fluoroethylene carbonate (FEC), succinic anhydride (SA), propylphosphonic anhydride (T3P), 1,3-propane sultone (PS), 1,4-butane sultone, ethane sultone, 1,3-propene sultone (PRS), 1,4-butene sultone, 1-methyl-1,3-propene sultone, ethylene sulfate, trimethylene sulfate (TMS), methyl trimethylene sulfate (MTMS), tetraphenylborate, lithium oxalyl difluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluoroacetonitrile, fluorobenzene, triethanolamine, ethylenediamine, tetravinylsilane, $LiN(SO_2F)_2$ (lithium bis(trifluoromethane sulfonyl)imide, LiTFSI), $LiPO_2F_2$, LiODFB, LiBOB, and $LiBF_4$. Alternatively, the SEI film-forming agent may be vinylene carbonate (VC), vinylethylene carbonate (VEC), fluoroethylene carbonate (FEC), 1,3-propane sultone (PS), succinic anhydride (SA), propylphosphonic anhydride (T3P), 1,3-propane sultone (PS), or a combination thereof.

The first electrolyte solution may contain the SEI film-forming agent in an amount of 3.0 wt% or less, 2.0 wt% or less, 1.5 wt% or less, 1.2 wt% or less, or 1.0 wt% or less. When the content of the additive falls within the above range, effects such as improvement in low-temperature output, high-temperature storage characteristics, and high-temperature life characteristics of the battery can be exhibited. In addition, because the amount of the SEI film-forming agent is not excessive, sufficient decomposition can occur at high temperatures, so that the SEI film-forming agent is not present as an unreacted substance or precipitate at room temperature, thereby preventing side reactions in the electrolyte solution during charging and discharging of the battery.

In addition to the components of the first electrolyte solution, one or more additives, for example, a haloalkylene carbonate-based compound such as difluoroethylene carbonate, pyridine, triethylphosphite, triethanolamine, cyclic ether, ethylene diamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, a lithium salt for corrosion prevention, or HF scavenger, may be further contained in the first electrolyte solution for the purpose of improving life characteristics of the battery, suppressing a decrease in battery capacity, and improving discharge capacity of the battery.

In an exemplary embodiment of the present invention, the second electrolyte solution may further contain an additive.

In an exemplary embodiment of the present invention, the second electrolyte solution may contain an HF scavenger as an additive.

The HF scavenger is added to remove HF that is generated by a reaction between incompletely dissociated lithium salt and $H_2O$ remaining inside the battery, and is not particularly limited as long as it is a material capable of removing HF without participating in the electrochemical reactions of the battery. Specifically, it may be a material containing a functional group capable of removing HF, and may be a material containing a Si-O bond, a silane compound, or a silazane compound.

According to an exemplary embodiment of the present invention, the HF scavenger may be a silane-based compound.

According to an exemplary embodiment of the present invention, the HF scavenger may be at least one of trimethoxysilane (TMS), triethoxysilane (TES), hexamethyldisilazane (HMDS), or bis(trimethylsilyl)amine (HMDSA).

In the present specification, the term "removal" refers to a function such as elimination, adsorption or capture of a by-product (HF) by the HF scavenger.

The second electrolyte solution may contain the HF scavenger in an amount of 2 wt% or less, preferably 1.9 wt% or less or 1.8 wt% or less. If the content of the HF scavenger is below 0.1 wt%, the effect of removing by-products by the scavenger may be insufficient, and if the content of the HF scavenger exceeds 10 wt%, the HF scavenger material itself may act as a by-product in the battery, leading to a deterioration in electrochemical performance of the battery.

When the content of the HF scavenger falls within the above range, by-products generated after the first activation process can be effectively removed, and thus the battery characteristics of the final product can be improved.

In addition to the components of the second electrolyte solution, one or more additives, for example, a haloalkylene carbonate-based compound such as difluoroethylene carbonate, pyridine, triethylphosphite, triethanolamine, cyclic ether, ethylene diamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, a lithium salt for corrosion prevention, or an SEI forming agent, may be further contained in the second electrolyte solution for the purpose of improving life characteristics of the battery, suppressing a decrease in battery capacity, and improving discharge capacity of the battery.

In an exemplary embodiment of the present invention, the first electrolyte solution and the second electrolyte solution each independently contain the same or different solvent(s). The solvent may be used without limitation as long as it is commonly used in the art.

For example, the solvent may be a non-aqueous organic solvent. Specifically, the solvent may include a cyclic carbonate-based solvent, a linear carbonate-based solvent, an ester-based solvent, or a combination thereof.

The solvent may include a mixture including a cyclic carbonate-based solvent and a linear carbonate-based solvent, a mixture including a cyclic carbonate-based solvent and an ester-based solvent, or a mixture including a cyclic carbonate-based solvent, a linear carbonate-based solvent, and an ester-based solvent.

The cyclic carbonate-based solvent may be included in an amount of 10 to 45 parts by weight with respect to 100 parts by weight of the total solvent. For example, the cyclic carbonate-based solvent may be included in an amount of 10 parts by weight or more, 15 parts by weight or more, 20 parts by weight or more, or 30 parts by weight or more, and 45 parts by weight or less, 40 parts by weight or less, 35 parts by weight or less, or 30 parts by weight or less, with respect to 100 parts by weight of the total solvent. When the cyclic carbonate-based solvent is included within the above range, the electrolyte solution can smoothly dissociate the lithium salt, thereby ensuring sufficient ion conductivity and cation transport capacity.

The cyclic carbonate-based solvent is a high-viscosity organic solvent, and when included in the solvent, the dielectric constant of the cyclic carbonate-based solvent is high, so that the lithium salt in the electrolyte solution can be smoothly dissociated, thereby improving ion conductivity and cation transport capacity.

In an exemplary embodiment of the present invention, the cyclic carbonate-based solvent may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

The linear carbonate-based solvent may be included in an amount of 55 to 90 parts by weight with respect to 100 parts by weight of the total solvent. For example, the linear carbonate-based solvent may be included in an amount of 55 parts by weight or more, 60 parts by weight or more, 65 parts by weight or more, or 70 parts by weight or more, and 90 parts by weight or less, 80 parts by weight or less, 70 parts by weight or less, or 60 parts by weight or less, with respect to 100 parts by weight of the total solvent. If the linear carbonate-based solvent is not included within the above range with respect to 100 parts by weight of the total solvent, the viscosity of the electrolyte solution is excessively high, so that the impregnation property of the electrolyte solution may not be sufficiently secured.

Therefore, by mixing and incorporating a cyclic carbonate-based solvent having a high dielectric constant and high viscosity and a linear carbonate-based solvent having a relatively low dielectric constant and relatively low viscosity in an appropriate ratio, an electrolyte solution can be provided in which the lithium salt is sufficiently dissociated, such that the electrolyte solution exhibits both excellent ion conductivity and superior impregnation properties.

The linear carbonate-based solvent may be at least one selected from the group consisting of dimethyl carbonate (DMC), diethyl carbonate (DEC), dipropyl carbonate, ethyl methyl carbonate (EMC), methyl propyl carbonate, and ethyl propyl carbonate.

The ester-based solvent may be included in an amount of 1 to 70 parts by weight with respect to 100 parts by weight of the total solvent. For example, the ester-based solvent may be included in an amount of 1 part by weight or more, 5 parts by weight or more, 10 parts by weight or more, or 20 parts by weight or more, and 70 parts by weight or less, 60 parts by weight or less, 50 parts by weight or less, or 40 parts by weight or less, with respect to 100 parts by weight of the total solvent. When the ester-based solvent is included within the above range with respect to 100 parts by weight of the total solvent, the impregnation properties of the electrolyte solution can be improved and the low-temperature characteristics can be enhanced.

The ester-based solvent is an organic solvent having low density, low viscosity and low melting point, and when included in the solvent, it can prevent the viscosity of the electrolyte solution from becoming excessively high and improve low-temperature characteristics.

The ester-based solvent may be at least one selected from the group consisting of methyl acetate, ethyl acetate (EA), dimethyl acetate, methyl propionate (MP), ethyl propionate (EP), propyl propionate (PP), decanolide, valerolactone, mevalonolactone, and caprolactone.

The ester-based solvent may be a linear ester-based solvent. Specifically, the ester-based solvent may be at least one selected from the group consisting of methyl acetate, ethyl acetate (EA), dimethyl acetate, methyl propionate (MP), ethyl propionate (EP), and propyl propionate (PP).

A method for manufacturing a lithium secondary battery according to an exemplary embodiment of the present invention includes steps of manufacturing an electrode assembly including a positive electrode and a negative electrode and housing the electrode assembly in a battery case. The battery case in which the electrode assembly is housed may be classified into prismatic, coin, cylindrical, pouch, and other types. A method of housing the electrode assembly in the case varies slightly depending on the type.

The method for manufacturing a lithium secondary battery according to an exemplary embodiment of the present invention includes a step of injecting a first electrolyte solution into the battery case. The step of injecting the first electrolyte solution is a step of injecting the first electrolyte solution into the battery case in which the electrode assembly including the positive electrode and the negative electrode is housed, and the electrolyte solution may be injected by various methods known in the art.

In an exemplary embodiment of the present invention, the first activation process includes a step of charging the battery case in which the first electrolyte solution has been injected.

By performing the first activation process, a first electrolyte solution-derived film may be formed on various interfaces inside the electrode, for example, on the surface of the active material.

In an exemplary embodiment of the present invention, the first activation process includes a step of charging the battery case in which the first electrolyte solution has been injected.

In an exemplary embodiment of the present invention, the first activation process includes a step of aging, degassing, charging, and discharging the battery case in which the first electrolyte solution has been injected. The aging and degassing methods are not limited as long as they are known in the art.

In an exemplary embodiment of the present invention, the first activation process includes steps of sealing the battery case in which the first electrolyte solution has been injected, and charging the sealed battery case.

The first activation process may include sealing the electrode assembly in which the first electrolyte solution has been injected, and then performing charging under a constant current condition of 0.01C to 5C within a charging voltage range of 1.0 V to 4.5 V. Specifically, the charging voltage may be 1.0 V or more, or 1.2 V or more, and 4.5 V or less, 4.2 V or less, or 4.0 V or less. The constant current condition may be 0.5 C or more, 0.2 C or more, or 0.1 C or more, and 1 C or less, 2 C or less, or 3 C or less.

In an exemplary embodiment of the present invention, the step of injecting the second electrolyte solution is a step of injecting the second electrolyte solution into the battery case subjected to the first electrolyte solution injection and the first activation process. That is, since it is a step of injecting the second electrolyte solution while the first electrolyte solution is present inside the battery case, the first electrolyte solution and the second electrolyte solution may be mixed inside the battery case in which the second electrolyte solution has been injected.

In an exemplary embodiment of the present invention, the second activation process includes a step of charging the battery case in which the second electrolyte solution has been injected.

By performing the second activation process, a second electrolyte solution-derived film that complements the first electrolyte solution-derived film can be formed at various interfaces inside the electrode, such as the first electrolyte solution-derived film or the surface of the active material.

In an exemplary embodiment of the present invention, the second activation process includes a step of charging the battery case in which the second electrolyte solution has been injected.

The second activation process may be the same as or different from the first activation process.

In an exemplary embodiment of the present invention, the second activation process includes a step of charging and discharging the battery case in which the second electrolyte solution has been injected.

In an exemplary embodiment of the present invention, the second activation process includes a step of aging, degassing, charging, and discharging the battery case in which the second electrolyte solution has been injected. The aging and degassing methods are not limited as long as they are known in the art.

In an exemplary embodiment of the present invention, the second activation process includes steps of sealing the battery case in which the second electrolyte solution has been injected, and charging the sealed battery case.

The second activation process may include sealing the electrode assembly in which the second electrolyte solution has been injected, and then performing charging under a constant current condition of 0.01C to 5C within a charging voltage range of 1.0 V to 4.5 V. Specifically, the charging voltage may be 1.0 V or more, or 1.2 V or more, and 4.5 V or less, 4.2 V or less, or 4.0 V or less. The constant current condition may be 0.5 C or more, 0.2 C or more, or 0.1 C or more, and 1 C or less, 2 C or less, or 3 C or less.

The method for manufacturing a lithium secondary battery according to an exemplary embodiment of the present invention can stably form a corrosion prevention film (electrolyte solution-derived film) on the surface of the active material by injecting the first electrolyte solution into the electrode assembly and then performing the first activation process. By performing the second activation step after injecting the second electrolyte solution in a state in which the corrosion prevention film is stably formed in this manner, the output characteristics and life characteristics of a lithium secondary battery can be improved simultaneously.

That is, the method for manufacturing a lithium secondary battery according to an exemplary embodiment of the present invention has the feature of forming a robust and uniform electrolyte solution-derived film by sequentially injecting two different types of electrolyte solutions and performing the respective activation processes, thereby complementing portions where an electrolyte solution-derived film is non-uniformly formed according to a local electrolyte solution concentration gradient.

Accordingly, it is possible to improve stoppage phenomena due to decreased reactivity or reactivity overload that frequently occurs when using one type of electrolyte solution, and to smoothly provide sources for forming a film that is broken or generated as the charge/discharge cycle progresses, as well as to improve ion diffusion and conductivity in the electrolyte solution.

## **Secondary Battery**

According to an exemplary embodiment of the present invention, a lithium secondary battery manufactured by the above-described method is provided.

A lithium secondary battery according to an exemplary embodiment of the present invention includes a positive electrode and a negative electrode.

In an exemplary embodiment of the present invention, the positive electrode may include a positive electrode current collector and a positive electrode active material stacked on the positive electrode current collector.

In an exemplary embodiment of the present invention, the positive electrode includes a current collector layer and a positive electrode active material layer provided on the current collector layer, and the positive electrode active material layer includes a positive electrode active material, a first electrolyte solution-derived film provided on the positive electrode active material, and a second electrolyte solution-derived film provided on the positive electrode active material or the first electrolyte solution-derived film.

The first electrolyte solution-derived film and the second electrolyte solution-derived film are films derived from a first electrolyte solution and a second electrolyte solution, respectively, and shapes, compositions, and characteristics of the first electrolyte solution-derived film and the second electrolyte solution-derived film are different according to compositions of the first electrolyte solution and the second electrolyte solution. The first electrolyte solution-derived film and the second electrolyte solution-derived film may be distinguished through analysis of the remaining electrolyte solution, or through electrolyte solution-derived film analysis by NMR or XPS depth profile.

The first electrolyte solution-derived film is formed during the step of performing the first activation process in the method for manufacturing a lithium secondary battery according to an exemplary embodiment of the present invention. That is, the first electrolyte solution-derived film is an electrolyte solution-derived film derived from the first electrolyte solution according to an exemplary embodiment of the present invention.

The second electrolyte solution-derived film is formed during the step of performing the second activation process in the method for manufacturing a lithium secondary battery according to an exemplary embodiment of the present invention. That is, the second electrolyte solution-derived film is an electrolyte solution-derived film derived from the second electrolyte solution according to an exemplary embodiment of the present invention.

In an exemplary embodiment of the present invention, the first electrolyte solution-derived film and the second electrolyte solution-derived film are CEI films.

The positive electrode current collector layer includes a positive electrode current collector, the positive electrode current collector is not particularly limited as long as it has conductivity without causing a chemical change in the battery, and for example, stainless steel, aluminum, nickel, titanium, calcined carbon, or aluminum or stainless steel surface-treated with carbon, nickel, titanium, silver, or the like may be used. In addition, the positive electrode current collector may typically have a thickness of 1 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may include a lithium composite transition metal compound including nickel (Ni), cobalt (Co), and manganese (Mn). In addition, the positive electrode active material includes nickel, cobalt, and manganese, and may further include aluminum, but is not limited thereto.

In addition, the positive electrode active material may include 80 mol% or more and less than 100 mol% of nickel among metals other than lithium, and the lithium composite transition metal compound including 80 mol% or more and less than 100 mol% of nickel among metals other than lithium may include one or a mixture of two or more types compounds represented by the following chemical formula 1.

[Chemical Formula 1] $\quad Li_aNi_{1-b-c-d}Co_bMn_cQ_dO_{2+\delta}$

In the Chemical Formula, Q is any one or more elements selected from the group consisting of Na, K, Mg, Ca, Sr, Ni, Co, Ti, Al, Si, Sn, Mn, Cr, Fe, V and Zr, and $1 \leq a \leq 1.5$, $0 < b \leq 0.5$, $0 < c \leq 0.5$, $0 \leq d \leq 0.1$, $0 < b+c+d \leq 0.2$, and $-0.1 \leq \delta \leq 1.0$.

According to an exemplary embodiment of the present invention, the positive electrode according to the exemplary embodiment described above further includes a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, various copolymers thereof, or the like, and any one thereof alone or a mixture of two or more thereof may be used.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In an exemplary embodiment of the present invention, the negative electrode may include a negative electrode current collector and a negative electrode active material stacked on the negative electrode current collector.

In an exemplary embodiment of the present invention, the negative electrode includes a current collector layer and a negative electrode active material layer provided on the current collector layer, and the negative electrode active material layer includes a negative electrode active material, a first electrolyte solution-derived film provided on the negative electrode active material, and a second electrolyte solution-derived film provided on the negative electrode active material or the first electrolyte solution-derived film.

The first electrolyte solution-derived film and the second electrolyte solution-derived film are films derived from a first electrolyte solution and a second electrolyte solution, respectively, and shapes, compositions, and characteristics of the first electrolyte solution-derived film and the second electrolyte solution-derived film are different according to compositions of the first electrolyte solution and the second electrolyte solution. The first electrolyte solution-derived film and the second electrolyte solution-derived film may be distinguished through analysis of the remaining electrolyte solution, or through electrolyte solution-derived film analysis by NMR or XPS depth profile.

The first electrolyte solution-derived film is formed during the step of performing the first activation process in the method for manufacturing a lithium secondary battery according to an exemplary embodiment of the present invention. That is, the first electrolyte solution-derived film is an electrolyte solution-derived film derived from the first electrolyte solution according to an exemplary embodiment of the present invention.

The second electrolyte solution-derived film is formed during the step of performing the second activation process in the method for manufacturing a lithium secondary battery according to an exemplary embodiment of the present invention. That is, the second electrolyte solution-derived film is an electrolyte solution-derived film derived from the second electrolyte solution according to an exemplary embodiment of the present invention.

In an exemplary embodiment of the present invention, the first electrolyte solution-derived film and the second electrolyte solution-derived film are SEI films.

The negative electrode current collector layer includes a negative electrode current collector, and the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 $\mu$m to 500 $\mu$m. However, the thickness of the current collector is not limited thereto.

In an exemplary embodiment of the present invention, the negative electrode active material is a carbon-based active material or a silicon-based active material.

The carbon-based active material may be graphite. The graphite may be natural graphite, artificial graphite, or a mixture of natural graphite and artificial graphite. In addition, when the graphite is a mixture of natural graphite and artificial graphite, the weight ratio of the natural graphite and the artificial graphite may be 50:50 to 90:10, and specifically 60:40 to 80:20 or 65:35 to 75:25.

In an exemplary embodiment of the present invention, an average particle diameter ($D_{50}$) of the graphite may be 10 $\mu$m to 20 um. Specifically, it may be 15 $\mu$m to 20 $\mu$m. When the average particle diameter of graphite falls within the aforementioned range, the influence of particle agglomeration is reduced and the slurry dispersibility can be improved.

In an exemplary embodiment of the present invention, the silicon-based active material may be $SiO_x$ (x=0), $SiO_x$ (0<x<2), or a silicon-carbon composite.

The silicon-carbon composite may be a Si/C-based active material. The silicon-carbon composite may consist of Si and C that are not bonded to each other, but may also contain an additional component as needed. For example, the silicon-carbon composite may or may not contain silicon carbide denoted as SiC. When the silicon-carbon composite contains silicon carbide, a content thereof is 3 wt% or less. The silicon-carbon composite may be present in a crystalline state, an amorphous state, or a mixed state thereof. According to one example, C in the silicon-carbon composite may be present in an amorphous state.

The silicon-carbon composite may be a composite of silicon, carbon, and the like, and may form a structure in which a core composite of silicon, carbon, and the like is surrounded by graphite, graphene, amorphous carbon, or the like. In the silicon-carbon composite, silicon may be nano silicon.

The silicon-carbon composite may be a physical or chemical composite of carbon and silicon materials described above, and is not limited as long as it has a configuration in which the carbon and silicon materials form a composite.

In an exemplary embodiment of the present invention, in the lithium secondary battery according to the above-described exemplary embodiment, the negative electrode active material layer may further include a negative electrode binder in addition to the negative electrode active material.

The negative electrode binder may serve to improve adhesion between particles of the negative electrode active material and adhesive force between particles of the negative electrode active material and the negative electrode current collector. The negative electrode binder may be one known in the art, and non-limiting examples thereof include at least one of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluoro rubber, polyacrylic acid, or a material in which hydrogen of these is substituted with Li, Na, Ca, or the like, and may also include various copolymers thereof.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite and artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powders; a conductive whisker

EP 4 773 308 A1

such as zinc oxide and potassium titanate; a conductive metal oxide such as titanium oxide; a conductive material such as polyphenylene derivative, and the like may be used.

In an exemplary embodiment of the present invention, the positive electrode further includes a positive electrode active material layer including the positive electrode active material, the negative electrode further includes a negative electrode active material layer including the negative electrode active material, and thicknesses of the positive electrode and negative electrode active material layers are each 10 $\mu$m or greater and 500 $\mu$m or less. The thickness of the positive electrode active material layer may be 90% to 110%, for example, 95% to 105% of the thickness of the negative electrode active material layer, and the thicknesses may be the same. Specifically, the thicknesses of the positive electrode and negative electrode active material layers may be each 15 $\mu$m or greater and 400 $\mu$m or less, 20 $\mu$m or greater and 300 $\mu$m or less, 25 $\mu$m or greater and 200 $\mu$m or less, or 30 $\mu$m or greater and 100 $\mu$m or less.

In an exemplary embodiment of the present invention, the electrode assembly includes a positive electrode and a negative electrode, and may further include a separator.

The separator serves to separate the negative electrode and the positive electrode and to provides a migration passway for lithium ions, and any separator may be used without particular limitation as long as it is typically used as the separator in a secondary battery, and particularly, a separator having high moisture-retention ability for an electrolyte solution as well as low resistance to ion migration of the electrolyte solution may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In an exemplary embodiment of the present invention, the electrode assembly is a power generation element capable of charging and discharging, and includes a positive electrode and a negative electrode. The electrode assembly is not particularly limited as long as it has a structure including the positive electrode and the negative electrode, and the electrode assembly may be manufactured by various methods known in the art.

Hereinafter, preferred examples are provided for better understanding of the present invention. It is apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**Example 1**

1) Preparation of Electrode Assembly

A positive electrode active material layer composition was prepared with $LiNi_{0.92}Co_{0.06}Mn_{0.02}O_2$ (average particle diameter (D50): 15 $\mu$m) as a positive electrode active material, carbon black (product name: Super C65 manufactured by Timcal) as a conductive material, and polyvinylidene fluoride (PVdF) as a binder in a weight ratio of 97:1.5:1.5. The positive electrode active material layer composition was added to N-methyl-2-pyrrolidone (NMP) as a solvent for forming a positive electrode slurry to prepare a positive electrode slurry having a solid content of 78 wt%. The positive electrode slurry was coated on both surfaces of an aluminum current collector (thickness: 12 $\mu$m) as a positive electrode current collector in a loading amount of 537 mg/25 cm$^2$, which was then roll-pressed and dried at 130°C in a vacuum oven for 10 hours to form a 65 $\mu$m thick positive electrode active material layer, resulting in preparation of a positive electrode (porosity 26%).

A negative electrode active material layer composition was prepared with $SiO_x$ (x=0) (average particle diameter (D50): 8 $\mu$m) as a negative electrode active material, single-walled carbon nanotubes (SWCNTs) as a conductive material, and polyacrylamide (PAM) as a binder in a weight ratio of 89:1:19. The negative electrode active material layer composition was added to distilled water as a solvent for forming a negative electrode slurry to prepare a negative electrode slurry having a solid content of 25 wt%. The negative electrode slurry was coated on both surfaces of a copper current collector (thickness: 8 $\mu$m) as a negative electrode current collector in a loading amount of 85 mg/25 cm$^2$, which was then roll-pressed and dried at 130°C in a vacuum oven for 10 hours to form a 33 $\mu$m thick negative electrode active material layer, resulting in preparation of a negative electrode (porosity 55%).

An electrode assembly was prepared by interposing a polyethylene (PE) separator between the positive electrode and the negative electrode.

2) Preparation of Electrolyte Solution

**Preparation of First Electrolyte Solution**

A first electrolyte solution was prepared by adding vinylene carbonate (VC) as an SEI film-forming agent in an amount of 1.5 wt% based on the total weight of the electrolyte solution to an organic solvent obtained by mixing ethylene carbonate (EC), ethyl methyl carbonate (EMC), and dimethyl carbonate (DMC) in a volume ratio of 20:5:75, and adding 1.2 M of $LiPF_6$ as a lithium salt.

**Preparation of Second Electrolyte Solution**

A second electrolyte solution was prepared by adding trimethoxysilane (TMS) as an HF scavenger in an amount of 1.8 wt% based on the total weight of the electrolyte solution to an organic solvent obtained by mixing ethylene carbonate (EC), ethyl methyl carbonate (EMC), and dimethyl carbonate (DMC) in a volume ratio of 20:5:75, and adding 0.5 M of LiFSI as a lithium salt.

3) Preparation of Secondary Battery

The electrode assembly prepared in the above-described manner was placed in a battery case, and the first electrolyte solution was injected in an amount of 70 vol% with respect to 100 vol% of the total injection amount of the electrolyte solution. The battery case having the first electrolyte solution injected therein was left at 25°C for 40 hours, and was then charged at a constant current of 1 C up to 4.2 V to perform the first activation process.
A secondary battery was prepared by injecting 30 vol% of the second electrolyte solution with respect to 100 vol% of the total injection amount of the electrolyte solution into the battery case subjected to the first activation process, and then performing charging at a constant current of 1.0 C up to 4.2 V to perform the second activation process.

**Examples 2 to 4**

Secondary batteries were prepared in the same manner as in Example 1, except that, in 2) preparation of electrolyte solution of Example 1, the first electrolyte solution and the second electrolyte solution had the compositions shown in Table 1 below.

**Comparative Example 1**

A secondary battery was prepared in the same manner as in Example 1, except that, in 2) preparation of electrolyte solution of Example 1, the electrolyte solution was prepared by adding vinylene carbonate (VC) as an SEI film-forming agent in an amount of 1.5 wt% based on the total weight of the electrolyte solution to an organic solvent obtained by mixing ethylene carbonate (EC), ethyl methyl carbonate (EMC), and dimethyl carbonate (DMC) in a volume ratio of 20:5:75, and adding 1.2 M of $LiPF_6$ as a lithium salt.

**Comparative Examples 2 to 6**

Secondary batteries were prepared in the same manner as in Example 1, except that, in 2) preparation of electrolyte solution of Example 1, the first electrolyte solution and the second electrolyte solution had the compositions shown in Table 1 below.

[Table 1]

| | Lithium salt (M) in first electrolyte solution | Lithium salt (M) in second electrolyte solution | Lithium salt concentration difference (M) |
|---|---|---|---|
| Example 1 | $LiPF_6$ 1.2 M | LiFSI 0.5M | 0.7 |
| Example 2 | $LiPF_6$ 1.5 M | $LiPF_6$ 0.5 M | 1 |
| Example 3 | $LiPF_6$ 1.2 M | $LiPF_6$ 0.5 M | 0.7 |
| Example 4 | $LiPF_6$ 1.2 M | $LiPF_6$ 0.7 M | 0.5 |
| Comparative Example 1 | $LiPF_6$ 1.2 M | - | - |
| Comparative Example 2 | $LiPF_6$ 1 M | LiFSI 1 M | 0 |

(continued)

|  | Lithium salt (M) in first electrolyte solution | Lithium salt (M) in second electrolyte solution | Lithium salt concentration difference (M) |
|---|---|---|---|
| Comparative Example 3 | $LiPF_6$ 1 M | $LiPF_6$ 1 M | 0 |
| Comparative Example 4 | $LiPF_6$ 1.2 M | $LiPF_6$ 0.8 M | 0.4 |
| Comparative Example 5 | $LiPF_6$ 0.5 M | $LiPF_6$ 0.8 M | 0.3 |
| Comparative Example 6 | $LiPF_6$ 0.5 M | $LiPF_6$ 1.2 M | 0.7 |

<Experimental Example>

The following items were evaluated for Examples 1 to 4 and Comparative Examples 1 to 6 prepared as described above.

**Experimental Example 1: Evaluation of Discharge Capacity, Initial Efficiency, and Life (Capacity Retention Rate) Characteristics**

The secondary batteries prepared in the examples and comparative examples were charged and discharged to evaluate the discharge capacity, initial efficiency, and capacity retention rate, and the results thereof are listed in Table 2 or 3 below.

The charging and discharging were performed at 0.1 C for the first cycle and the second cycle, and the charging and discharging were performed at 0.5 C from the third cycle to the 49th cycle. At the 50th cycle, the charging and discharging were terminated in a charge state (with lithium contained in the negative electrode).

Charging conditions: CC (constant current)/CV (constant voltage) (5 mV/0.005 C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (first discharge capacity/first charge capacity) X 100

The capacity retention rate was derived by the following calculation.

Capacity retention rate (%) = (49th discharge capacity/first discharge capacity) X 100

**Experimental Example 2: Evaluation of Li Plating Start Point**

The secondary batteries prepared in the examples and comparative examples were charged and discharged to evaluate the Li plating start point, and the results thereof are listed in Table 2 or 3 below.

Charging and discharging were performed at 0.1C in the 1st and 2nd cycles, and at 3 C from the 3rd cycle onward to measure the cell resistance.

Charging conditions: CC (constant current)/CV (constant voltage) (5 mV/0.005 C current cut-off)
Discharging conditions: CC (constant current) condition 1.5V

The SOC (State of Charge) at the point where the cell resistance sharply decreased and a sudden change in current value occurred was calculated as the lithium plating occurrence point.

[Table 2]

| | Lithium salt (M) in first electrolyte solution | Lithium salt (M) in second electrolyte solution | Lithium salt concentration difference (M) | Discharge capacity (mAh/g) | Initial efficiency (%) | Capacity retention rate (%) | Li Plating Start Point (SOC (%)) |
|---|---|---|---|---|---|---|---|
| Example 1 | $LiPF_6$ 1.2 M | LiFSI 0.5M | 0.7 | 243.7 | 91.3 | 97.6 | 45.2 |
| Example 2 | $LiPF_6$ 1.5 M | $LiPF_6$ 0.5 M | 1 | 243.9 | 91.4 | 97.7 | 45.6 |
| Example 3 | $LiPF_6$ 1.2 M | $LiPF_6$ 0.5 M | 0.7 | 242.4 | 91.0 | 96.9 | 44.8 |
| Example 4 | $LiPF_6$ 1.2 M | $LiPF_6$ 0.7 M | 0.5 | 242.1 | 91.0 | 96.8 | 43.3 |
| Comparative Example 1 | $LiPF_6$ 1.2 M | - | - | 238.5 | 89.9 | 94.6 | 39.0 |
| Comparative Example 2 | $LiPF_6$ 1 M | LiFSI 1 M | 0 | 241.9 | 90.8 | 96.3 | 43.0 |
| Comparative Example 3 | $LiPF_6$ 1 M | $LiPF_6$ 1 M | 0 | 240.2 | 90.7 | 95.4 | 41.8 |
| Comparative Example 4 | $LiPF_6$ 1.2 M | $LiPF_6$ 0.8 M | 0.4 | 240.7 | 90.8 | 95.5 | 42.5 |
| Comparative Example 5 | $LiPF_6$ 0.5 M | $LiPF_6$ 0.8 M | 0.3 | 239.5 | 90.1 | 95.3 | 41.2 |

According to Table 2 above, it was confirmed that Examples 1 to 4 according to an exemplary embodiment of the present invention exhibited superior discharge capacity, initial efficiency, capacity retention rate, and Li plating start point to Comparative Examples 1 to 5. On the other hand, in Comparative Examples 1 to 5 where the difference in lithium salt concentrations of the first electrolyte solution and the second electrolyte solution does not fall within the range of the present disclosure, it can be confirmed that the electrolyte solution-derived film is not stably formed on the electrode surface, resulting in the inferior effects. In particular, in Comparative Example 1 where the electrolyte solution was injected and activated once, respectively, degassing was insufficient during the battery preparing process, resulting in the most inferior battery characteristics compared with Examples 1 to 4 and Comparative Examples 2 to 5.

In Examples 1 and 3 and Comparative Example 6 where the difference in lithium salt concentrations of the first electrolyte solution and the second electrolyte solution was 0.7 M, the ion conductivity and viscosity of each electrolyte solution were additionally measured in the first and second electrolyte solutions, and the results thereof are listed together with the above experimental results in Table 3.

The ion conductivity was measured at 25°C using a probe-type ion conductivity measuring device (InoLab 731. Model S470, Manufacturer: Mettler Torodo) and the viscosity was measured at 25°C using an RS150 viscometer (manufacturer: McIntosh) for each of the electrolyte solutions.

[Table 3]

| | | Example 1 | Example 3 | Comparative Example 6 |
|---|---|---|---|---|
| First electrolyte solution | Lithium salt concentration (M) | $LiPF_6$ 1.2 M | $LiPF_6$ 1.2 M | $LiPF_6$ 0.5 M |
| | Thermal decomposition temperature (°C) of lithium salt | 80 | 80 | 200 |
| | Ion conductivity (mS/cm) | 12.8 | 12.8 | 9.55 |
| | Viscosity (cP) | 2.82 | 2.82 | 1.34 |

(continued)

|  |  | Example 1 | Example 3 | Comparative Example 6 |
|---|---|---|---|---|
| Second electrolyte solution | Lithium salt concentration (M) | LiFSI 0.5M | $LiPF_6$ 0.5 M | $LiPF_6$ 1.2 M |
|  | Thermal decomposition temperature (°C) of lithium salt | 200 | 80 | 80 |
|  | Ion conductivity (mS/cm) | 9.55 | 8.47 | 12.8 |
|  | Viscosity (cP) | 1.34 | 1.41 | 2.82 |
| Lithium salt concentration difference (M) | | 0.7 | 0.7 | 0.7 |
| Discharge capacity (mAh/g) | | 243.7 | 242.4 | 239.6 |
| Initial efficiency (%) | | 91.3 | 91.0 | 90.4 |
| Capacity retention rate (%) | | 97.6 | 96.9 | 95.3 |
| Li Plating Start Point (SOC (%)) | | 45.2 | 44.8 | 41.6 |

According to Table 3 above, when comparing Examples 1 and 3 and Comparative Example 6, it was confirmed that Examples 1 and 3 exhibited superior discharge capacity, initial efficiency, capacity retention rate, and Li plating start point to Comparative Example 6. This is understood to be because the lithium salt concentration of the first electrolyte solution of Comparative Example 6 is lower than the lithium salt concentration of the second electrolyte solution, so the first electrolyte solution-derived film primarily formed on the electrode surface is not stably formed. In addition, it can be confirmed that Example 1 exhibits superior battery characteristics to Example 3. This is understood to be because, even when the lithium salt concentrations of the second electrolyte solutions of Examples 1 and 3 are the same, the anion size of the lithium salt contained in the second electrolyte solution of Example 1 is larger than the anion size of the lithium salt contained in the second electrolyte solution of Example 3, so the second electrolyte solution of Example 1 exhibits higher ion conductivity and lower viscosity even when the lithium salt in the second electrolyte solution has the same concentration.

Although the present invention has been described with reference to exemplary embodiments thereof, those skilled in the art is able to make various applications and modifications within the scope of the present invention based on the above description.

**Claims**

1. A method for manufacturing a lithium secondary battery, comprising:

    injecting a first electrolyte solution into a battery case in which an electrode assembly comprising a positive electrode and a negative electrode is housed;
    performing a first activation process after injecting the first electrolyte solution;
    injecting a second electrolyte solution different from the first electrolyte solution into the battery case subjected to the first activation process; and
    performing a second activation process after injecting the second electrolyte solution, wherein
    the first electrolyte solution and the second electrolyte solution each independently contain a lithium salt,
    a lithium salt concentration of the first electrolyte solution is greater than a lithium salt concentration of the second electrolyte solution, and
    a difference in the lithium salt concentrations of the first electrolyte solution and the second electrolyte solution is from 0.5 M to 2 M.

2. The method of claim 1, wherein the lithium salt concentration of the first electrolyte solution is 0.8 M to 2 M.

3. The method of claim 1, wherein the lithium salt concentration of the second electrolyte solution is 0.3 M to 1 M.

4. The method of claim 1, wherein the lithium salt in the first electrolyte solution and the lithium salt in the second electrolyte solution are the same.

5. The method of claim 1, wherein the lithium salt in the first electrolyte solution and the lithium salt in the second electrolyte solution are different.

6. The method of claim 5, wherein a thermal decomposition temperature of the lithium salt in first second electrolyte solution is lower than a thermal decomposition temperature of the lithium salt in the second electrolyte solution.

7. The method of claim 1, wherein a viscosity of the first electrolyte solution is higher than a viscosity of the second electrolyte solution.

8. The method of claim 1, wherein an ion conductivity of the first electrolyte solution is higher than an ion conductivity of the second electrolyte solution.

9. The method of claim 1, wherein the first electrolyte solution further contains a solid electrolyte interphase (SEI) film-forming agent.

10. The method of claim 1, wherein the second electrolyte solution further contains an HF scavenger.

11. The method of claim 10, wherein the HF scavenger is a silane-based compound.

12. A lithium secondary battery manufactured by the method for manufacturing a lithium secondary battery of any one of claims 1 to 11.

13. The lithium secondary battery of claim 12, wherein

the lithium secondary battery comprises the positive electrode and the negative electrode,
the positive electrode comprises a current collector layer and a positive electrode active material layer provided on the current collector layer, and
the positive electrode active material layer comprises:

a positive electrode active material,
a first film derived from the first electrolyte solution and provided on the positive electrode active material, and
a second film derived from the second electrolyte solution and provided on the positive electrode active material or the first film.

14. The lithium secondary battery of claim 12, wherein

the lithium secondary battery comprises the positive electrode and the negative electrode,
the negative electrode comprises a current collector layer and a negative electrode active material layer provided on the current collector layer, and
the negative electrode active material layer comprises:

a negative electrode active material,
a first film derived from the first electrolyte solution and provided on the negative electrode active material, and
a second film derived from the second electrolyte solution provided on the negative electrode active material or the first film.

[FIG. 1]

[FIG. 2]

(a)

(b)

(c)

[FIG. 3]

(a)

(b)

(c)

[FIG. 4]

## INTERNATIONAL SEARCH REPORT

| International application No. |
|---|
| **PCT/KR2025/011088** |

| A. | CLASSIFICATION OF SUBJECT MATTER |
|---|---|

**H01M 10/0568**(2010.01)i; **H01M 10/058**(2010.01)i; **H01M 10/052**(2010.01)i; **H01M 10/44**(2006.01)i; **H01M 50/609**(2021.01)i; **H01M 10/0567**(2010.01)i; **H01M 10/42**(2006.01)i

According to International Patent Classification (IPC) or to both national classification and IPC

| B. | FIELDS SEARCHED |
|---|---|

Minimum documentation searched (classification system followed by classification symbols)

H01M 10/0568(2010.01); H01M 10/052(2010.01); H01M 10/0525(2010.01); H01M 10/0567(2010.01); H01M 10/058(2010.01); H01M 10/42(2006.01); H01M 2/36(2006.01); H01M 50/178(2021.01); H01M 50/571(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 이차전지(lithium secondary battery), 전해액(electrolyte), 활성화 공정 (activation process), 리튬염(lithium salt)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0129942 A (LG ENERGY SOLUTION, LTD.) 11 September 2023 (2023-09-11) see paragraphs [0007], [0085], [0143]-[0144], [0149], [0198], [0208]-[0212], [0225]; claims 4, 14. | 1-14 |
| Y | US 2023-0318037 A1 (MURATA MANUFACTURING CO., LTD.) 05 October 2023 (2023-10-05) see claim 1. | 1-14 |
| A | KR 10-1732652 B1 (LG CHEM, LTD.) 24 May 2017 (2017-05-24) see entire document. | 1-14 |
| A | KR 10-2023-0021375 A (LG ENERGY SOLUTION, LTD.) 14 February 2023 (2023-02-14) see entire document. | 1-14 |
| A | CN 106784589 A (NINGDE CONTEMPORARY AMPEREX TECHNOLOGY CO., LTD.) 31 May 2017 (2017-05-31) see entire document. | 1-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 November 2025** | **13 November 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
**Information on patent family members**

International application No.

**PCT/KR2025/011088**

| Patent document cited in search report | | | Publication date (day/month/year) | Patent family member(s) | | | Publication date (day/month/year) |
|---|---|---|---|---|---|---|---|
| KR | 10-2023-0129942 | A | 11 September 2023 | CN | 118511351 | A | 16 August 2024 |
| | | | | EP | 4443593 | A1 | 09 October 2024 |
| | | | | EP | 4443593 | A4 | 11 June 2025 |
| | | | | JP | 2024-540380 | A | 31 October 2024 |
| | | | | JP | 7718777 | B2 | 05 August 2025 |
| | | | | US | 2025-0070414 | A1 | 27 February 2025 |
| | | | | WO | 2023-167486 | A1 | 07 September 2023 |
| US | 2023-0318037 | A1 | 05 October 2023 | CN | 116936925 | A | 24 October 2023 |
| KR | 10-1732652 | B1 | 24 May 2017 | KR | 10-2016-0038600 | A | 07 April 2016 |
| KR | 10-2023-0021375 | A | 14 February 2023 | None | | | |
| CN | 106784589 | A | 31 May 2017 | EP | 3540824 | A1 | 18 September 2019 |
| | | | | EP | 3540824 | A4 | 04 December 2019 |
| | | | | EP | 3540824 | B1 | 31 May 2023 |
| | | | | WO | 2018-103335 | A1 | 14 June 2018 |

Form PCT/ISA/210 (patent family annex) (July 2022)

**EP 4 773 308 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240098612